Europäisches Patentamt

European Patent Office

Office européen des brevets

(19)

(11) Numéro de publication: **0 206 968**
A1

## (12) DEMANDE DE BREVET EUROPEEN

(21) Numéro de dépôt: 86460007.7

(22) Date de dépôt: 17.04.86

(51) Int. Cl.⁴: **B 66 F 7/08,** E 04 B 1/343, E 04 H 9/14

(30) Priorité: 18.04.85 FR 8506023

(43) Date de publication de la demande: 30.12.86
**Bulletin 86/52**

(84) Etats contractants désignés: **AT BE CH DE GB IT LI NL SE**

(71) Demandeur: **Le Blay, Alfred, 16 Cité Belle Aurore Reguiny, F-56500 Locmine (FR)**
Demandeur: **Le Blay, Jean-Paul, Les Bots, F-22600 Loudeac (FR)**
Demandeur: **Le Vu, Gérard, 9 Grande Rue, F-43190 Tence (FR)**

(72) Inventeur: **Le Blay, Alfred, 16 Cité Belle Aurore Reguiny, F-56500 Locmlne (FR)**
Inventeur: **Le Blay, Jean-Paul, Les Bots, F-22600 Loudeac (FR)**
Inventeur: **Le Vu, Gérard, 9 Grande Rue, F-43190 Tence (FR)**

(54) **Ensemble de construction habitable à hauteur variable.**

(57) Ensemble de construction de hauteur variable qui comprend une habitation (19) reposant sur une plate-forme supérieure (9) elle-même fixée à un vérin central (10) et à au moins deux éléments articulés (18) liés à une plate-forme au sol (1). L'habitation peut, grâce à un pignon cannelé entraîné par un moteur (17) et tournant dans un évidement de la plate-forme supérieure, effectuer une rotation sur elle-même.

EP 0 206 968 A1

La présente invention concerne une construction habitable à hauteur variable de structure légère du type préfabriqué ou béton cellulaire ou équivalent.

Il est bien connu que dans les régions soumises à des perturbations climatiques importantes, des détériorations des habitations, notamment par inondations, sont fréquentes.

La présente invention permet de rémédier à ces inconvénients.

L'ensemble de construction selon la présente invention comprend une habitation reposant sur une plateforme supérieure elle-même fixée à un vérin central et à au moins deux éléments articulés liés à une plateforme au sol.

La figure 1 représente une vue générale de la construction selon la présente convention (position relevée).

La figure 2 est une vue éclatée d'un élément articulé de la présente invention.

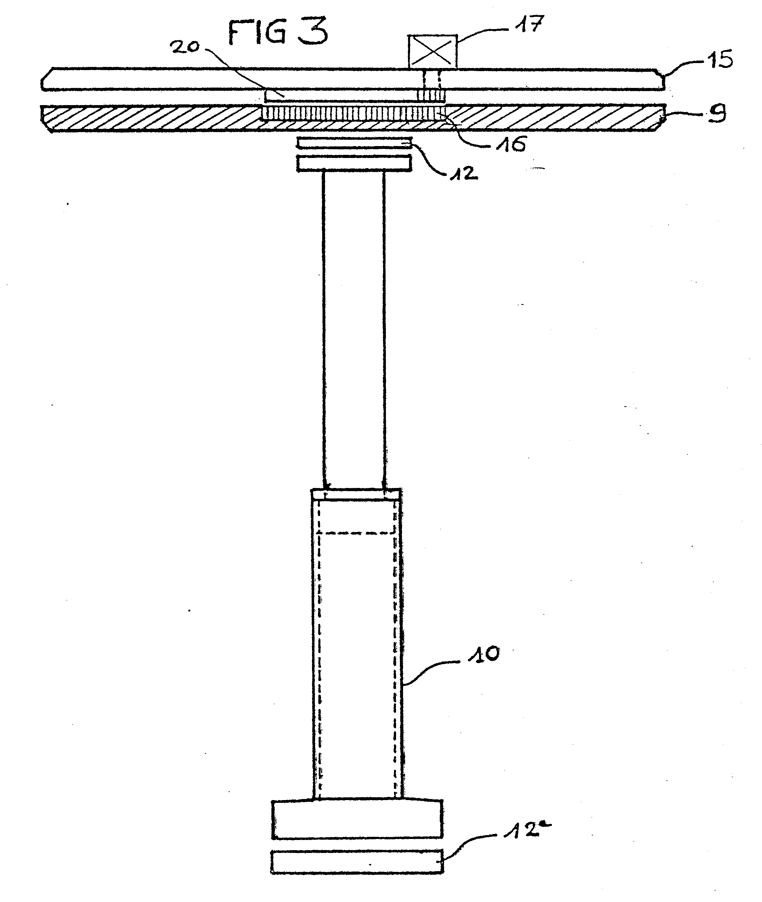

La figure 3 représente une réalisation particulière d'un dispositif permettant une orientation de l'habitation.

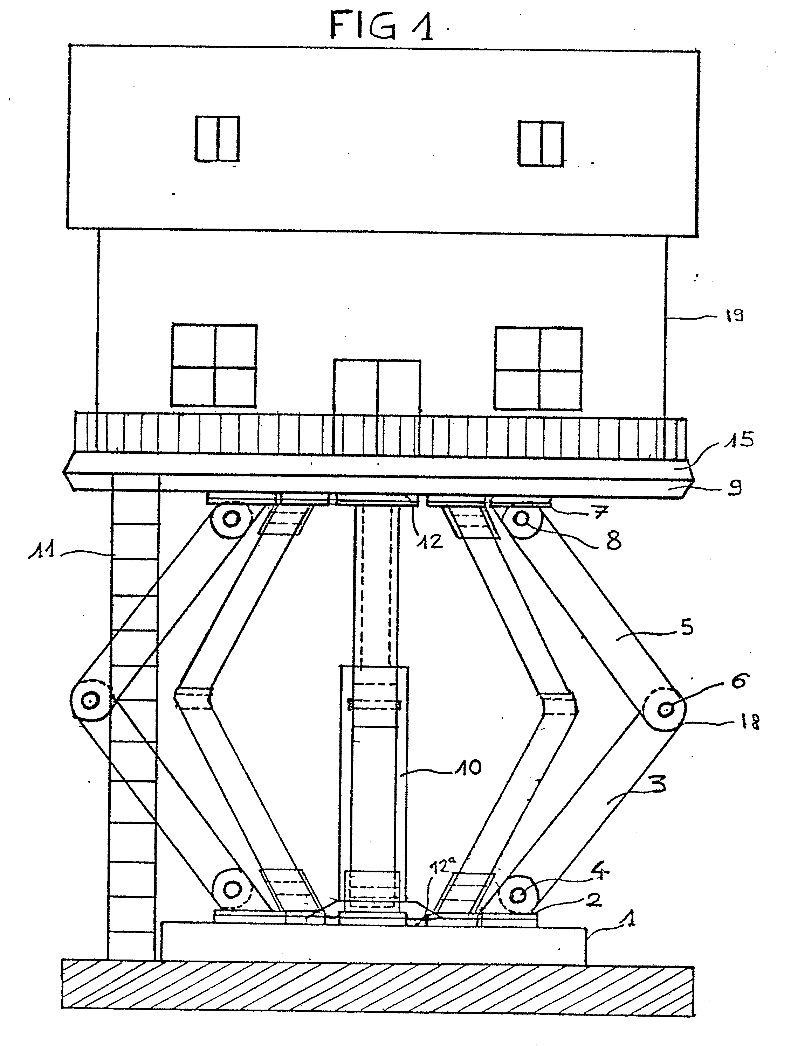

L'invention telle que représentée sur la figure 1 comprend une plateforme au sol (1) dans laquelle sont fixées des chapes (2) destinées à recevoir la base du vérin central (10) et des éléments articulés (18). Ces éléments articulés qui sont au moins au nombre de deux, sont de façon préférentielle au nombre de six et disposés régulièrement à la base d'angles de 60°. Cette disposition permet une plus grande stabilité de l'ensemble. La partie supérieure du vérin central (10) et des éléments articulés (18) est fixée à une plateforme supérieure (9) par l'intermédiaire de chapes (7). La semelle (15) de l'habitation (19) repose sur la semelle (9).

Selon un mode de réalisation préférentiel, la plateforme supérieure (9) comprend une partie évidée et cannelée dans laquelle vient s'emboîter la partie saillante (20) de la semelle (15). Le pignon cannelé du moteur (17) permet la rotation de l'habitation autour de la plateforme (9).

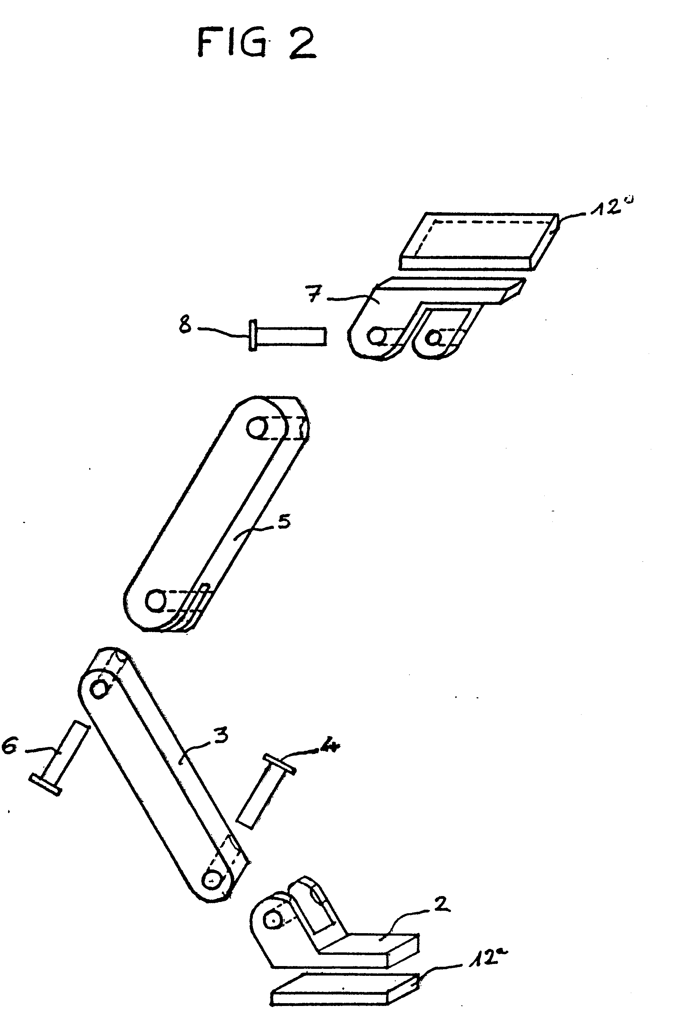

Les éléments articulés (figure 2) sont entièrement démontables, ils se composent d'une chape (2) accouplée à un bras (3) à l'aide d'un axe (4). Le bras (3) reçoit le bras (5) accouplé par l'axe (6). Le bras (5) est accouplé à la chape (7) par l'axe (8).

Entre la plateforme supérieure (9) et la chape (7) et entre la plateforme (1) et la chape (2) sont placées respectivement des silence-blaocs, en caoutchouc semi-rigide, destinés à atténuer l'effet des vibrations du sol sur l'habitation (19).

Une échelle (11) permet l'accès au sol de l'habitation dans sa position relevée.

Revendications

1) Ensemble de construction de hauteur variable caractérisé en ce qu'il comprend une habitation reposant sur une plateforme supérieure elle-même fixée à un vérin central et à au moins deux éléments articulés liés à une plateforme au sol.

2) Ensemble de construction selon la revendication 1 caractérisé en ce que les éléments articulés sont au nombre de six disposés régulièrement tous les 60°.

3) Ensemble de construction selon la revendication 1 ou 2 caractérisé en ce que les amortisseurs (12) sont placés aux points d'ancrage supérieurs et inférieurs du vérin et des éléments articulés avec les plateformes supérieures et inférieures.

4) Ensemble de construction selon l'une quelconque des revendications précédentes caractérisé en ce qu'un dispositif cannelé entraîné par un moteur et tournant dans un évidement cannelé de plateforme supérieure permet une rotation de l'habitation.

FIG 1

FIG 2

FIG 3

Office européen
des brevets

**RAPPORT DE RECHERCHE EUROPEENNE**

0206968
Numéro de la demande

EP 86 46 0007

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 026 714 (NIEDERMAIER) <br> * En entier * <br><br> --- | 1,4 | B 66 F 7/08 <br> E 04 B 1/343 <br> E 04 H 9/14 |
| Y | GB-A- 999 010 (ZARGES) <br> * Page 1, lignes 76-86; page 2, lignes 1-39 * <br><br> --- | 1,4 | |
| A | DE-C- 910 114 (BEECK) <br><br> --- | | |
| A | US-A-2 363 784 (GERICH) <br><br> --- | | |
| A | GB-A-2 139 596 (STANDARD TELEPHONES) <br><br> --- | | |
| A | DE-A-3 108 552 (LAIS) <br><br> --- | | |
| A | GB-A-1 553 107 (NISSO SANGYO CO.) <br><br> --- | | |
| A | DE-A-3 027 301 (EISENWERK FRIEDRICH SCHRÖDER) <br><br> --- | | |
| A | US-A-2 189 486 (D'AMICO) <br><br> --- -/- | | |

DOMAINES TECHNIQUES RECHERCHES (Int. Cl.4)

B 66 F
E 04 H
E 04 B
E 02 D

Le présent rapport de recherche a été établi pour toutes les revendications

| Lieu de la recherche <br> LA HAYE | Date d'achèvement de la recherche <br> 29-09-1986 | Examinateur <br> VAN DEN BERGHE E.J.J |
|---|---|---|

**0206968**

Numéro de la demande

| Catégorie | Citation du document avec indication, en cas de besoin, des parties pertinentes | Revendication concernée | CLASSEMENT DE LA DEMANDE (Int. Cl.4) |
|---|---|---|---|
| **DOCUMENTS CONSIDERES COMME PERTINENTS** | | | Page  2 |
| A | US-A-2 715 756  (CARVER) | | |
| | ----- | | |
| | | | **DOMAINES TECHNIQUES RECHERCHES (Int. Cl.4)** |

Le présent rapport de recherche a été établi pour toutes les revendications

| Lieu de la recherche | Date d'achèvement de la recherche | Examinateur |
|---|---|---|
| LA HAYE | 29-09-1986 | VAN DEN BERGHE E.J.J |